# EUROPÄISCHE PATENTANMELDUNG

(11) **EP 0 972 978 A1**
(43) Veröffentlichungstag der Anmeldung: **19.01.2000**
(21) Anmeldenummer: 99112986.7
(22) Anmeldetag: 06.07.1999
(51) Int. Cl.: F16K 31/08

(54) **Antrieb für ein Ventil**

(30) Priorität: 15.07.1998 DE 19831630
(71) Anmelder: RUHRGAS AKTIENGESELLSCHAFT, 45138 Essen (DE)
(72) Erfinder: Korsmeier, Wilhelm, 45665 Recklinghausen (DE); Wehling, Heinz-Bernhard, 46282 Dorsten (DE); Wolf, Dieter, 46286 Dorsten (DE)

(57) **Zusammenfassung**

Das Stellglied (4) weist einen in eine stationäre Hülse (8) eingreifenden Schaft (9) auf, der ein Außengewinde (10) trägt, wobei die Hülse mit einem auf das Außengewinde des Schaftes passenden Innengewindes (12) versehen ist. Der Hülse (8) ist ein drehbares Antriebselement (7) zugeordnet, welches über eine Magnetkupplung mit dem Schaft (9) des Stellgliedes (4) gekuppelt ist. Dabei kann der Schaft (9) in beiden Drehrichtungen aus dem Gewindeeingriff der Hülse (8) herausgedreht werden. Bei dieser Verstellung erzeugt die Magnetkupplung eine Axialkraft, die den Schaft (9) in Richtung auf den Gewindeeingriff verspannt. Es ergibt sich also eine Wegbegrenzung für die Verstellung des Stellgliedes (4). Bei Drehrichtungsumkehr wird der Gewindeeingriff augenblicklich wieder hergestellt.

## Beschreibung

Die Erfindung betrifft einen Antrieb für ein in einem Gehäuse arbeitendes Stellglied, insbesondere für ein Ventilelement einer Gasarmatur.

Ein wesentliches Problem der heutigen Gasversorgung besteht darin, daß das Gasnetz mit unterschiedlichen Gasen beschickt werden. Die Gase können sich vor allen Dingen in ihrem Energieinhalt unterscheiden. Ändert sich der Heizwert, so verschiebt sich zwangsläufig der Betriebspunkt der Gasverbrauchseinrichtungen.

Zwar besteht die Möglichkeit, Gasverbrauchseinrichtungen, insbesondere Brenner, derart auszulegen, daß sie über einem breiten Heizwertbereich stabil arbeiten, jedoch ist das Minimum der Umweltbelastung einem bestimmten Betriebspunkt zugeordnet.

Man ist daher bestrebt, vor Ort die jeweiligen Gaseigenschaften zu erfassen und die Gasverbrauchseinrichtungen entsprechend einzustellen. Dies geschieht beispielsweise dadurch, daß man einer Gasregelarmatur ein Ventil nachschaltet, dessen Ventilelement in Abhängigkeit von einem Sensorsignal verstellt wird, welches repräsentativ ist für die Eigenschaften des aktuell anstehenden Gases.

Dieses Ventilelement bedarf zumindest in Öffnungsrichtung einer Wegbegrenzung, um eine Überlastung der nachgeschalteten Gasverbrauchseinrichtung zu vermeiden.

Der Erfindung liegt die Aufgabe zugrunde, einen Antrieb der eingangs genannten Art zu schaffen, der über eine solche Wegbegrenzung verfügt.

Zur Lösung dieser Aufgabe ist der eingangs genannte Antrieb dadurch gekennzeichnet,
- daß das Stellglied einen in eine gehäusefeste Hülse eingreifenden Schaft aufweist, der ein Außengewinde trägt, wobei die Hülse mit einem auf das Außengewinde des Schaftes passenden Innengewinde versehen ist,
- daß der Hülse ein drehbares Antriebselement zugeordnet ist, welches über eine Magnetkupplung mit dem Schaft des Stellgliedes gekuppelt ist, und
- daß der Schaft des Stellgliedes in mindestens einer Drehrichtung aus dem Gewindeeingriff der Hülse herausdrehbar ist, wobei die Magnetkupplung den Schaft des Stellgliedes in Richtung auf den Gewindeeingriff verspannt.

Die Wegbegrenzung besteht also darin, daß das Außengewinde des Schaftes des Stellgliedes in dessen Öffnungsrichtung und vorzugsweise auch in dessen Schließrichtung aus dem Innengewinde der Hülse herausgeschraubt wird. Das Antriebselement kann sich dann ungehindert weiter drehen, wobei es über die Magnetkupplung auch den Schaft des Stellgliedes und damit das Stellglied selbst mitnimmt. Eine Positionsänderung des Stellgliedes in dieser Drehrichtung erfolgt nicht.

Die Endposition des Stellgliedes ist exakt fixiert, und zwar dadurch, daß die Magnetkupplung den Schaft des Stellgliedes in Richtung auf den Gewindeeingriff verspannt. Diese Verspannung führt ferner dazu, daß das Außengewinde des Schaftes des Stellgliedes bei einer Drehrichtungsumkehr sofort wieder in das Innengewinde der Hülse hineinwandert. Eine Drehrichtungsumkehr bewirkt also eine augenblickliche Bewegung des Stellgliedes entgegen der vorherigen Bewegungsrichtung. Die Ansprechempfindlichkeit ist entsprechend hoch.

Die Regelempfindlichkeit läßt sich über die Steigung des Gewindeeingriffs vorwählen, wobei die Gewindelänge den möglichen Hub bestimmt.

Hervorzuheben ist ferner, daß der die beiden Endpositionen des Stellgliedes definierende "Freilauf" mit einer Konstruktion erzielt wird, die an Einfachheit nicht zu überbieten ist.

Dies gilt insbesondere dann, wenn die Hülse am gehäusefernen Ende geschlossen ist. Es bedarf also lediglich einer einfachen stationären Abdichtung zwischen der Hülse und dem Gehäuse. Im übrigen ist der gesamte Antrieb gasdicht, da die Magnetkupplung keines Durchbruchs bedarf.

In wesentlicher Weiterbildung der Erfindung wird vorgeschlagen, daß die Magnetkupplung entgegengesetzt gepolte, axial ausgerichtete Magneten aufweist, die im Antriebselement und im Schaft des Stellgliedes derart angeordnet sind, daß sie in der neutralen Stellung des Stellgliedes einander gegenüberliegen. Diese Anordnung gewährleistet nicht nur die Übertragung eines ausreichenden Drehmoments, sondern erzeugt bei einer axialen Auslenkung der Kupplung aus der neutralen Stellung - die vorzugsweise die Mittelstellung ist - auch Rückstellkräfte von ausreichender Größe, um die Endpositionen des Stellgliedes zu fixieren und bei Drehrichtungsumkehr einen sofortigen Gewindeeingriff zu gewährleisten.

Vorzugsweise handelt es sich um Stabmagneten, die paarweise angeordnet sind. In jedem Falle wird man bestrebt sein, die Magneten in Radialrichtung relativ dicht nebeneinander anzuordnen. Hierzu ist es vorteilhaft, das Antriebselement als Kappe auszubilden und auf die Hülse aufzustecken.

Vorzugsweise ist der Schaft des Stellgliedes in der Hülse geführt, wobei sich an das Außengewinde mindestens zur einen Seite hin ein Abschnitt des Schaftes mit vermindertem Durchmesser anschließt. Der Antrieb übernimmt also gleichzeitig die Führung des Stellgliedes, so daß auf zusätzliche Führungseinrichtungen verzichtet werden kann. Der Abschnitt mit vermindertem Durchmesser gewährleistet eine der "Freilaufstellungen".

Dabei ist es aus fertigungstechnischen Gründen ganz besonders vorteilhaft, das Außengewinde am gehäusefernen Ende des Schaftes des Stellgliedes anzuordnen.

Die Erfindung wird im folgenden anhand eines bevorzugten Ausführungsbeispiels im Zusammenhang mit der beiliegenden Zeichnung näher erläutert. Die Zeichnung zeigt in:
Figur 1 eine zum Teil geschnittene Ansicht eines kompletten Reglers;
Figur 2 geschnittene Darstellungen des Antriebs.

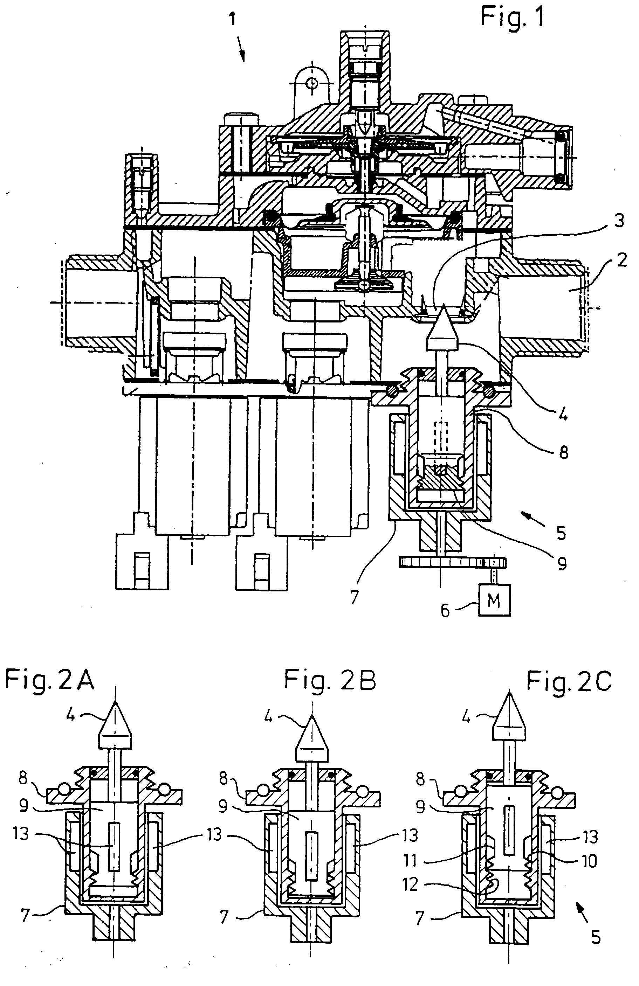

Bei dem Regler nach Figur 1 handelt es sich um einen Gas-Luft-Verbundregler 1 mit einem Gasauslaß 2, dem ein Regelquerschnitt 3 samt zugehörigem Stellglied 4 in Form eines Ventilelements vorgeschaltet ist. Betätigt wird das Stellglied 4 von einem Antrieb 5, der an einen Motor 6 angeschlossen ist. Der Motor 6 wird in Abhängigkeit von einem Signal betrieben, welches repräsentativ ist für den Heizwert des jeweils anstehenden Gases.

Der Motor 6 wirkt auf ein drehbares Antriebselement 7 ein, das als Kappe ausgebildet und auf eine gehäusefeste Hülse 8 aufgesteckt ist. Die Hülse 8 dient als Führung für einen Schaft 9, an welchem das Stellglied 4 befestigt ist. Der Schaft 9 weist an seinem gehäusefernen Ende ein Außengewinde 10 auf, an welches sich ein Abschnitt 11 mit vermindertem Durchmesser anschließt. Die Hülse 8 ist mit einem Innengewinde 12 versehen, welches auf das Außengewinde 10 des Schaftes 9 paßt. Das Innengewinde 12 befindet sich im Abstand vor dem geschlossenen Ende der Hülse 8. Diese Verhältnisse ergeben sich am deutlichsten aus Figur 2C.

Das Antriebselement 7 ist mit dem Schaft 9 des Stellgliedes 4 über eine Magnetkupplung gekuppelt. Letztere weist im vorliegenden Falle Magneten 13 auf, die in axialer Richtung ausgerichtet sind, wobei sie teils im Antriebselement 7 und teils im Schaft 9 sitzt.

Dreht sich also das Antriebselement 7, so wird der Schaft 9 mitgenommen, und zwar solange, bis das Außengewinde 10 des Schaftes den Gewindeeingriff mit dem Innengewinde 12 der Hülse verläßt. Ausgehend von der Mittelstellung nach Figur 2A, kann dies sowohl in Öffnungsrichtung (Figur 2B) als auch in Schließrichtung (Figur 2C) geschehen.

Wie in den Figuren 2B und 2C angedeutet, erzeugt die Magnetkupplung Axialkräfte, die den Schaft 9 und damit auch das Stellglied 4 in Richtung auf den Gewindeeingriff verspannen. Sowohl in Öffnungs-, als auch in Schließrichtung wird also eine Endposition für das Stellglied 4 definiert. Bei anschließender Drehrichtungsumkehr greifen die Gewinde 10 und 12 augenblicklich wieder ineinander.

In den beiden Endpositionen kann sich das Antriebselement 7 ungehindert weiterdrehen, wobei automatisch der Schaft 9 und damit auch das Stellglied 4 mitgenommen werden. Eine Positionsänderung des Stellgliedes erfolgt nicht.

Die Konstruktion ist äußerst einfach und bereitet darüber hinaus keinerlei Dichtungsprobleme, da lediglich eine stationäre Abdichtung zwischen dem Gehäuse der Armatur und der Hülse 8 erforderlich ist.

Im Rahmen der Erfindung sind durchaus Abwandlungsmöglichkeiten gegeben. Vor allen Dingen ist darauf hinzuweisen, daß der Antrieb in seiner Anwendbarkeit nicht auf Gasarmaturen beschränkt ist. Vielmehr läßt er sich überall dort einsetzen, wo Verstellbewegungen mit Wegbegrenzung in mindestens einer Richtung erforderlich sind, wobei das Antriebselement in der Grenzposition weiterlaufen und nach Drehrichtungsumkehr augenblicklich den Gewindeeingriff wieder herstellen kann. Der Gewindeeingriff seinerseits kann durchaus andersartig gestaltet sein. Beispielsweise kann das Innengewinde der Hülse an deren gehäusenahem Ende liegen. Ferner kann die Führungsfunktion von Hülse und Schaft getrennt und an anderer Stelle erfüllt werden. Schließlich kommen für die Ausbildung der Magnetkupplung verschiedenste Lösungen in Frage, sofern ausreichende Drehmomente übertragen und bei axialer Verstellung ausreichende Axialkräfte erzeugt werden können. Denkbar sind z. B. paarweise angeordnete Stabmagneten. Die beschriebene Konstruktion hat sich allerdings besonders bewährt.

## Patentansprüche

1. Antrieb für ein in einem Gehäuse arbeitendes Stellglied (4), insbesondere für ein Ventilelement einer Gasarmatur,
**dadurch gekennzeichnet,**
- daß das Stellglied (4) einen in eine gehäusefeste Hülse (8) eingreifenden Schaft (9) aufweist, der ein Außengewinde (10) trägt, wobei die Hülse (8) mit einem auf das Außengewinde des Schaftes passenden Innengewinde (12) versehen ist,
- daß der Hülse (8) ein drehbares Antriebselement (7) zugeordnet ist, welches über eine Magnetkupplung mit dem Schaft (9) des Stelligliedes (4) gekuppelt ist, und
- daß der Schaft (9) des Stellgliedes (4) in mindestens einer Drehrichtung aus dem Gewindeeingriff der Hülse (8) herausdrehbar ist, wobei die Magnetkupplung den Schaft des Stellgliedes in Richtung auf den Gewindeeingriff verspannt.

2. Antrieb nach Anspruch 1, dadurch gekennzeichnet, daß die Hülse (7) am gehäusefernen Ende geschlossen ist.

3. Antrieb nach Anspruch 1 oder 2, dadurch gekennzeichnet, daß die Magnetkupplung entgegengesetzt gepolte, axial ausgerichtete Magneten (13) aufweist, die im Antriebselement (7) und im Schaft (9) des Stellgliedes (4) derart angeordnet sind, daß sie in der neutralen Stellung des Stellgliedes einander gegenüberliegen.

4. Antrieb nach einem der Ansprüche 1 bis 3, dadurch gekennzeichnet, daß das Antriebselement (7) als Kappe ausgebildet und auf die Hülse (8) aufgesteckt ist.

5. Antrieb nach einem der Ansprüche 1 bis 4, dadurch gekennzeichnet, daß der Schaft (9) des Stellgliedes (4) in der Hülse (8) geführt ist, wobei sich an das Außengewinde (10) mindestens zur einen Seite hin ein Abschnitt (11) des Schaftes (9) mit vermindertem Durchmesser anschließt.

6. Antrieb nach Anspruch 5, dadurch gekennzeichnet, daß das Außengewinde (10) am gehäusefernen Ende des Schaftes (9) des Stellgliedes (4) angeordnet ist.
